# EUROPEAN PATENT SPECIFICATION

(11) **EP 2 865 886 B1**
(45) Date of publication and mention of the grant of the patent: **07.12.2016**
(21) Application number: 14189860.1
(22) Date of filing: 22.10.2014
(51) Int. Cl.: F03B 7/00, F03B 17/06

(54) **Hydraulic apparatus**
Hydraulische Vorrichtung
Appareil hydraulique

(30) Priority: 23.10.2013 IT MI20131766
(43) Date of publication of application: 29.04.2015
(73) Proprietor: Castagnaro, Mirco, 24042 Capriate San Gervasio (BG) (IT); Gambirasi, Sara, 24042 Capriate San Gervasio (BG) (IT)
(72) Inventor: Longo, Antonino Maria, 26841 Casalpusterlengo LO (IT)
(74) Representative: Spina, Alessandro

(56) References cited:
- EP-A2- 2 541 043
- DE-A1- 19 850 948
- JP-A- 2008 031 879
- JP-A- 2013 113 247

## Description

The present invention generally relates to hydraulic systems built in correspondence of ordinary watercourses and in particular to an integrated hydraulic apparatus suitable for the control of water, as well as for the production of mechanical and electric energy.

Hydraulic control entails studying, analyzing and controlling water, e.g. of a river, in a given territory and exploiting such water for irrigating fields, as well as for various industrial processes and for the production of electric energy.

Hydraulic systems built in correspondence of ordinary watercourses arc known since ancient times and generally require to build civil structures such as reservoirs and channels for the collection and channeling of water flows and to install local hydraulic apparatuses comprising water gates configured to intercept a stream of water and adjust its flow rate, thus allowing to control water.

Also known since ancient times are hydraulic apparatuses including water wheels suitable for converting potential or kinetic energy of watercourses into mechanical energy in the form of rotary motion and possibly also into electric energy by using suitable electric generators (see e.g. JP 2008 031879 A).

Despite the wide a/vailability of technical solutions in the field of hydraulic systems, there is still the need to provide hydraulic apparatuses which allow to improve the control of watercourses and their exploitation for the production of energy, which is an object of the present invention.

This object is achieved with a hydraulic apparatus whose main features are specified in the first claim, while other features are specified in the remaining claims.

An idea of solution underlying the present invention is to provide a hydraulic apparatus having a movable water gate, as well as a diverting element arranged beneath the water gate, the diverting element having a contoured surface shaped so as to cause a water stream intercepted by the gate to deviate. The hydraulic apparatus further includes a water wheel arranged downstream of the diverting element with respect to the direction of the water stream. The water stream deviated by the diverting element contacts the vanes of the water wheel thus causing it to rotate. The apparatus according to the invention also comprises moving means configured to selectively allow movements of the water gate vertically and in an oblique direction, as well as rotational movements relative to the direction of the water stream; the moving means are also configured to selectively move the diverting element and/or the water wheel in a substantially vertical direction.

Thanks to this configuration, the apparatus allows to control water, as well as to convert hydraulic energy into mechanical and/or electric energy.

An advantage provided by the invention is that the water gate, the diverting element and the water wheel may be jointly moved above the surface of a watercourse thus allowing to place the apparatus in a non-operating condition, wherein the natural flow conditions of the watercourse are temporarily restored without resorting to the construction of suitable bypass channels.

Further advantages and features of the hydraulic apparatus according to the present invention will be clear to those skilled in the art from the following detailed and non-limiting description of embodiments thereof with reference to the accompanying drawings, wherein:
- Figure 1 is a top view schematically showing a portion of a hydraulic apparatus according to the invention configured for the control of water in an ordinary watercourse;
- Figures 2a to 2c are side views schematically showing operation of the control portion of the hydraulic apparatus according to the invention;
- Figure 3 is a top view schematically showing an embodiment of the apparatus according to the invention comprising the hydraulic water control portion shown in figure 1 and a portion for the conversion of hydraulic energy into mechanical and/or electric energy;
- Figures 4a and 4b are side views schematically showing various operating conditions of hydraulic apparatus of figure 3;
- Figure 5 is a top view schematically showing an alternative embodiment of hydraulic apparatus of Figure 3; and
- Figures 6a to 6d are side views schematically showing various operating conditions of the hydraulic apparatus of figure 5.

Referring to the figures, a hydraulic apparatus according to the invention is generally indicated by reference numeral 100.

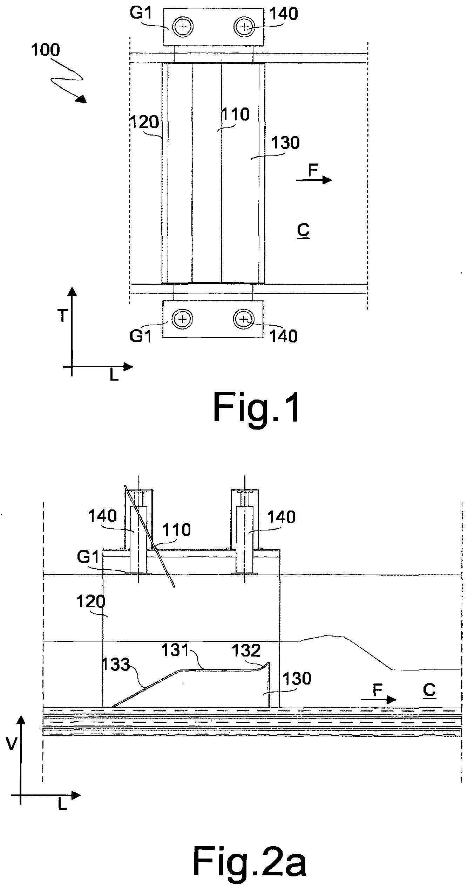

Now referring to figure 1, the apparatus 100 comprises at least one water gate 110 intended to intercept a stream of water supplied from a watercourse C in order to adjust its flow rate. In the figures, the water stream flowing direction is schematically indicated by an arrow F.

The apparatus 100 also includes a frame 120 and first moving means (not shown), such as hydraulic or mechanical actuators, connected to the frame 120 and to the water gate 110 in order to allow movements thereof in a predominantly vertical direction V, substantially perpendicular to the bottom of the watercourse. The frame 120 of the apparatus 100 is configured to be mounted in correspondence of the watercourse C, for example on a suitable supporting metallic structure G1 made along the banks of the stream and resting on respective foundations (not shown).

According to the invention, the apparatus 100 comprises at least one stream diverting element 130 restrained to the frame 120, for example fixed by way of bolts, and arranged beneath the water gate 110 in the vertical direction V. The diverting element 130 stretches out in a longitudinal direction L of the apparatus 100, perpendicular to the vertical direction V, and is provided with a contoured surface comprising a flat portion 131 and a subsequent inclined portion 132 that is oriented upwards relative to the vertical direction V. The diverting element 130 also stretches out in a transverse direction T, perpendicular to the vertical V and longitudinal L directions. The size of the diverting element in the transverse direction substantially corresponding to the size of the water gate 110 in the same direction, so that the whole water stream intercepted by the gate 110 also contacts the diverting element 130, and in particular its contoured surface.

The hydraulic apparatus 100 is configured such that the inclined portion 132 of the diverting element that receives the water stream diverts it upwards thus causing it to enhance its oxygen content, which is particularly useful for the improvement of chemical and physical properties of flowing water.

The assembly comprising the water gate and the diverting element is therefore a control portion of the hydraulic apparatus 100 according to the invention.

Furthermore, the configuration of the apparatus 100 is such that a free end of the water gate 110 faces the diverting element 130 and in particular the flat portion 131 of its contoured surface. Therefore, with reference to the flow direction F, when the water gate 110 is arranged under the surface of the water stream, the watercourse reaches a higher level immediately upstream thereof, while water flowing immediately downstream thereof reaches a higher velocity and the water stream becomes narrower, thus resulting in an increased height of the water stream diverted by the diverting element that further enhances its oxygenation.

In addition to this, according to the present invention the apparatus 100 comprises second moving means, for example hydraulic actuators schematically indicated by reference numeral 140, mounted on the supporting metallic structure G1 restrained to the banks of the watercourse C and connected to the frame 120. Similarly to the first moving means, also the second moving means 140 are configured to move the frame 120, and therefore also of the diverting element 130, in the vertical direction V.

The apparatus 100 is configured to allow to selectively operate or move the gate 110 and the frame 120 with the diverting element 130 in the vertical direction V.

With reference to Figures 2a to 2c, possible operating conditions are shown.

Figure 2a shows an operating condition wherein the frame 120 is immersed in the watercourse C and the diverting element 130 is under the water surface on the bottom of the watercourse C. Referring to the vertical direction V, the water stream is thus diverted upwards at the inclined portion 132 of the contoured surface. The water gate 110 is located above the water surface, hence the rising effect of the water stream depends only on the flow rate of the course C and on the slope of the inclined portion 132 of the diverting element 130.

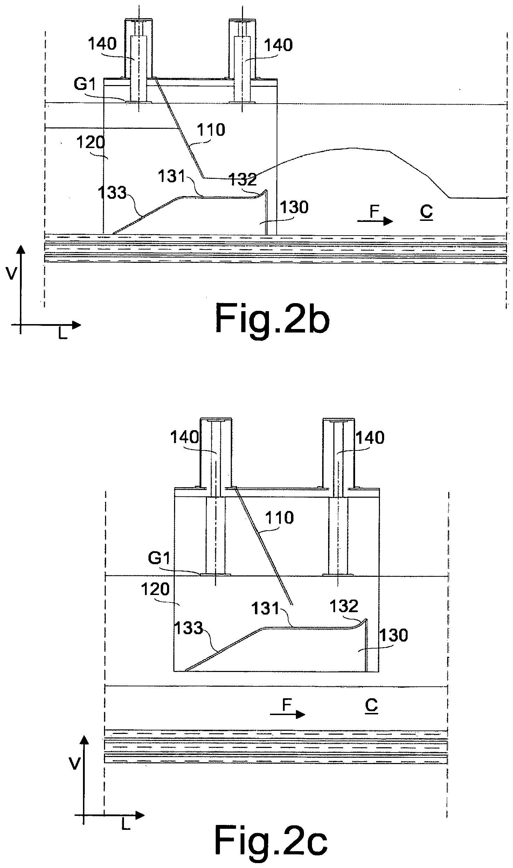

Figure 2b shows an operating condition of the apparatus similar to that shown in figure 2a, wherein, however, the water gate 110 is partially under the water surface, thus causing the water level to rise upstream thereof with respect to the flow direction F and results in a higher velocity of the water at the inclined portion 132 of the diverting element 130, which generates a greater deviation effect, for example rising of the stream, compared to the operating condition shown in Figure 2a.

Figure 2c instead shows a non-operating condition of the hydraulic apparatus 100, wherein the frame 120, and thus also the diverting element 130 and the water gate 110, are completely above the water surface. In this condition there is no interaction between the hydraulic apparatus 100 and the course C, which therefore has a natural flow condition.

As shown in Figures 2a to 2c, the contoured surface of the diverting element 130 may also comprise a further inclined portion 133 oriented upwards relative to the vertical direction V and arranged upstream of the flat portion 131 in the longitudinal direction L. The provision of the further inclined portion 133 is advantageous because it allows to progressively lead the water stream from the bottom of the watercourse C towards the flat portion 131 and to the subsequent inclined portion 132 of the diverting element 130, thus optimizing the stream of water and making its flow rate more regular downstream of the water gate 110.

The provision of the further inclined portion 133 is particularly useful in watercourses that have a substantially constant depth or in watercourses having natural widening portions downstream of which the hydraulic apparatus 100 is installed. The inclined portion 133 is not strictly necessary when the apparatus 100 is installed at natural or artificial hydraulic heads, because depending on the need the flat portion 131 of the contoured surface of the diverting element 130 may be suitably arranged at different heights compared to the head or even aligned therewith.

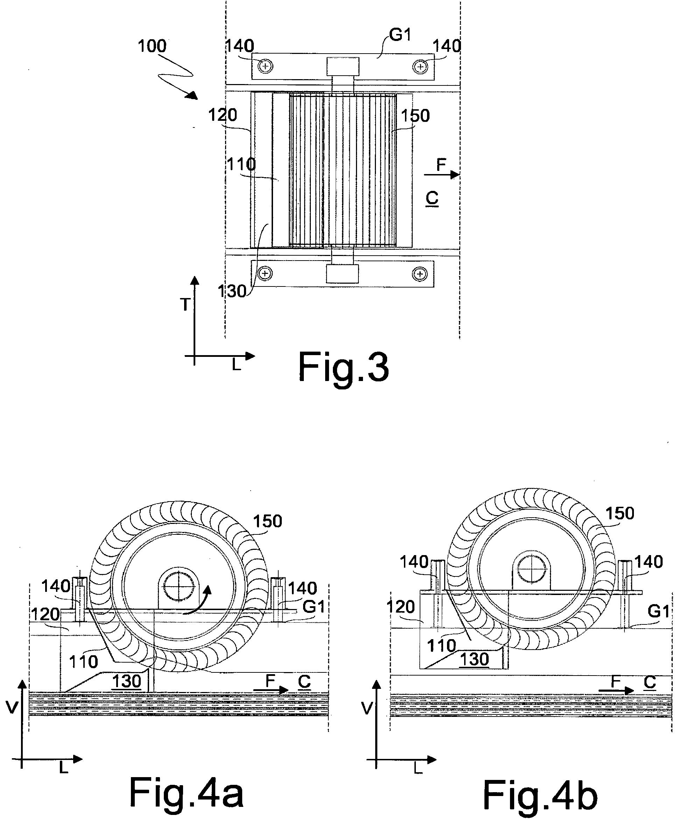

With reference to Figure 3, the apparatus 100 according to the invention is also provided with a portion configured for the conversion of hydraulic energy into mechanical energy and/or subsequently into electric energy, said portion comprising at least one water wheel 150 arranged downstream of the diverting element 130 in the longitudinal direction L.

Moreover, similarly to the diverting element 130, also the water wheel 150 stretches out in the transverse direction T and has a size in this direction substantially corresponding to the size of the water gate 110, whereby the whole water stream intercepted by the water gate 110 and by the diverting element 130 comes into contact with the water wheel 150, thus exploiting its entire operating portion.

The water stream risen by the diverting element 130 with the aid of the water gate 110 contacts the vane assembly of the water wheel 150 thus causing it to rotate. The hydraulic apparatus 100 according to the invention thus allows to control the watercourse C, as well as to convert hydraulic energy into mechanical energy, and possibly also into electric energy by way of a suitable generator coupled to the water wheel 150.

The water wheel 150 is arranged proximate to the inclined portion 132 of the contoured surface so as to fully exploit the rising effect of the water stream.

The final slope of the inclined portion 132 may advantageously be defined according to the shape of the vanes of the water wheel 150 so as to optimize its operation.

According to an embodiment of the invention (not shown), the inclined portion 132 may also be movably restrained to the diverting element 130, for example pivotally connected to the flat portion 131, in order to allow to vary its slope. This configuration is advantageous, because it allows e.g. to use the same type of diverting element with different types of water wheels by simply adjusting its slope depending on the geometry of the vanes. This configuration also allows to vary, in particular to optimize, the operating mode of the water wheel depending on the flow conditions of the watercourse C.

Furthermore, the water gate 110 may be rotatably restrained to the frame 120, for example by way of pivots, in order to allow variations of its slope with respect to the flow direction F of the watercourse. This configuration is advantageous because it allows e.g. to use the same type of water gate with different types of water wheel by simply adjusting its slope depending on the geometry of the vanes.

Adjustment of the slopes of the water gate 110 and of the inclined portion 132 of the contoured surface of the diverting element 130 are synergistic features of the invention, because they allow to optimize the flow conditions of a watercourse.

This configuration particularly allows to optimize operation of the water wheel depending on the flow conditions of the watercourse C by reducing its turbulence in correspondence with the gap between the end of the water gate 110 arranged under the water surface and the diverting element 130.

Now referring to figures 3, 4a and 4b, according to an embodiment of the invention the water wheel 150 is mounted on the same metallic structure G1 that supports the water gate 110, the frame 120 and the diverting element 130.

As shown in figure 4a, the hydraulic apparatus 100 can be selectively operated as described above, i.e. with the water gate 110 located above the water surface (not shown operating condition), whereby the rising effect of the water stream depends on the flow rate of the watercourse C and on the slope of the inclined portion 132 of the diverting element 130. The hydraulic apparatus 100 can also be operated with the water gate 110 partially under the water surface (shown operating condition), thereby making it possible to adjust the flow rate by varying the distance between the water gate 110 and the diverting element 130.

A non-operating condition is also foreseen, wherein the frame 120, and thus the water gate 110, the diverting element 130 and the water wheel 150, are completely lifted above the water surface, so that the watercourse C has natural flow. This condition is shown in Figure 4b.

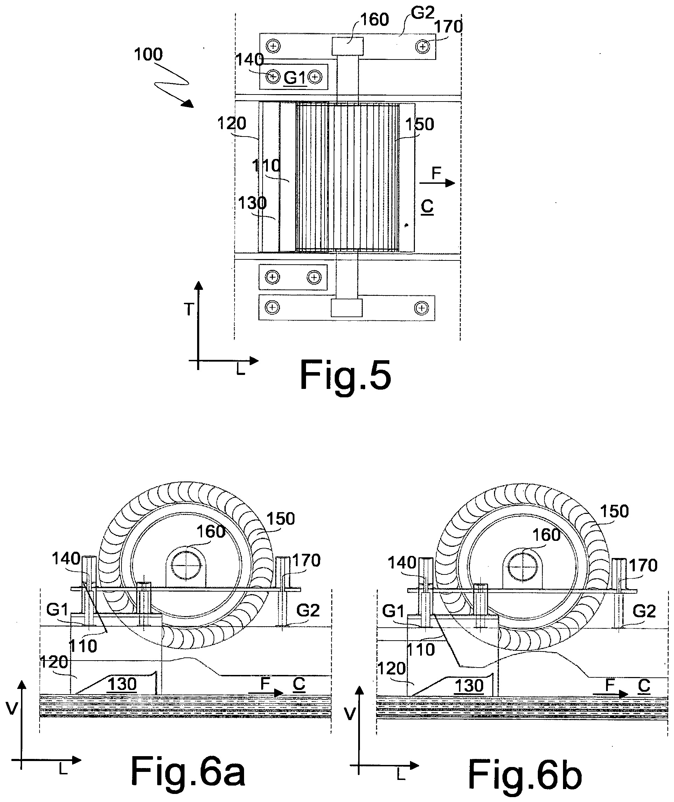

According to an alternative embodiment of the invention, shown in figures 5 and 6a to 6d, the water wheel 150 may advantageously be mounted on a frame 160 of the apparatus 100 that is completely independent from the frame 120 on which the water gate 110 and the diverting element 130 are mounted. The frame 160 is supported by a metallic structure G2, restrained to a foundation (not shown) formed along the bank of the watercourse C, on which third moving means 170 are mounted, e.g. still in the form of hydraulic actuators, thereby allowing to move the water wheel 150 in the vertical direction V.

Figures 6a and 6b show an operating condition wherein the apparatus 100 only performs the function of controlling the water stream by using the sole diverting element 130 arranged on the bottom of the watercourse C (Figure 6a) or both the diverting element 130 and the water gate 110 (figure 6b). In both cases, the water wheel 150 is maintained above the water surface and does not interact with the watercourse C.

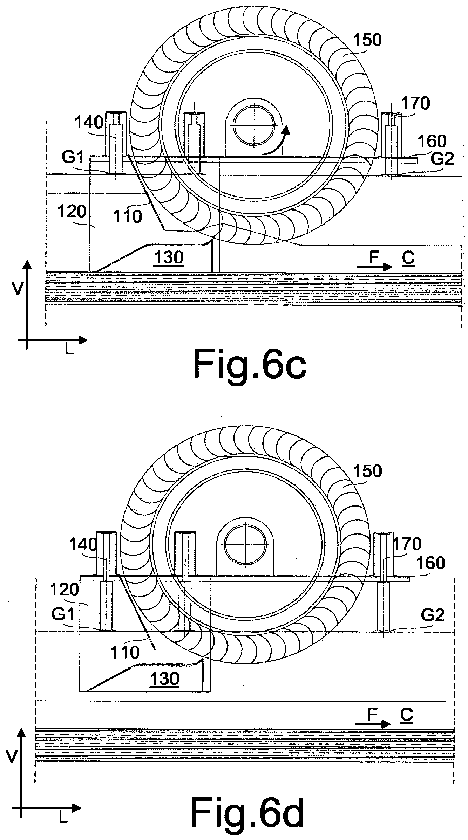

Figure 6c shows an operating condition wherein besides the control of the water stream hydraulic energy is also converted into mechanical and/or electric energy. As it may be seen, the water wheel 150 is arranged proximate to the water stream risen by the inclined portion 132 of the contoured surface of the diverting element 130, so that its vanes are subject to such stream and are moved thus causing the water wheel 150 to rotate around its own axis.

Figure 6d finally shows a non-operating condition of the apparatus 100, wherein the water gate 110, the diverting element 130 and the water wheel 150 are all lifted above the water surface, so that the watercourse C flows normally.

It will be understood that this embodiment of the hydraulic apparatus 100 is particularly advantageous because it allows to selectively and independently manage operation of the water wheel, thus allowing operators to use the apparatus 100 either for water control of a watercourse C, or for transformation of the hydraulic energy into mechanical energy, and possibly also electric energy.

It will also be understood that the water wheel 150 might be restrained to a frame configured to be fixed on the banks of the watercourse C by means of a supporting metallic structure. However, the two embodiments described above are preferred and advantageous, because they both give the possibility of temporarily restoring the natural flow conditions of the watercourse without requiring construction of bypass channels.

Driving of the actuators that allow to move in the vertical direction V the water gate 110, the frame 120 and the water wheel 150, when mounted on an independent frame, may be manual or, preferably, automatic by way of a suitable control system.

The present invention has hereto been described with reference to preferred embodiments thereof It will be understood that there may be other embodiments relating to the same inventive idea, as defined by the scope of protection of the claims set forth below.

## Claims

1. A hydraulic apparatus (100) comprising :
- at least one water gate (110) configured to intercept a stream of water supplied by a water course (C) to adjust its flow rate,
- a frame (120) configured to be mounted on banks of said watercourse (C) by way of a metallic structure (G1) of the apparatus (100),
- first moving means mounted between said frame (120) and said water gate (110) so as to allow movement of the latter in a direction (V) of the apparatus (100) that is predominantly vertical,
- at least one stream diverting element (130) fixed to the frame (120) and arranged below the water gate (110) relative to said vertical direction (V), said stream diverting element (130) stretching out in a longitudinal direction (L) of the apparatus (100), perpendicular to the vertical direction (V), and being provided with a contoured surface comprising in succession a flat portion (131) and an inclined portion (132) oriented upwards relative to the vertical direction (V),
- second moving means (140) mounted in the metallic structure (G1) and connected to the frame (120) in order to allow displacement of the latter and of the stream diverting element (130) in the vertical direction (V),
- at least one water wheel (150) arranged downstream of the stream diverting element (130) in the longitudinal direction (L).

2. An apparatus (100) according to claim 1, wherein the water wheel (150) is mounted on the same frame (120) to which the water gate (110) and the stream diverting element(130) are restrained.

3. An apparatus (100) according to claim 1, further comprising an additional frame (160) independent from the frame (120) on which the water gate (110) and the stream diverting element (130) are restrained, said additional frame (160) being adapted to support the water wheel (150) and configured to be mounted on the banks of said watercourse (C) by way of an additional metallic structure (G2) of the apparatus (100), and wherein the apparatus (100) further comprises third moving means (170) mounted in said additional metallic structure (G2) and connected to the additional frame (160) supporting the water wheel (150) so as to allow displacement of the water wheel (150) in the vertical direction (V).

4. An apparatus (100) according to claim 1, wherein the water wheel (150) is mounted on a frame configured to be mounted on the banks of said water course (C) by way of a metallic supporting structure, said frame being fixed relative to said metallic supporting structure.

5. An apparatus (100) according to any one of claims 1 to 4, wherein the stream diverting element (130) and the water wheel (150) also stretch out in a transverse direction (T), perpendicular to the vertical (V) and the longitudinal (L) directions, the transverse size of the stream diverting element (130) and of the water wheel (150) substantially corresponding to the transverse size of the water gate (110).

6. An apparatus (100) according to any one of claims 1 to 5, wherein the water wheel (150) is arranged proximate to the inclined portion (132) of the contoured surface of the stream diverting element (130).

7. An apparatus (100) according to any one of claims 1 to 6, wherein a free end of the water gate (110) faces the flat portion (131) of the contoured surface of the stream diverting element (130).

8. An apparatus (100) according to any one of claims 1 to 7, wherein the water gate (110) is rotatably restrained to the frame (120) and wherein the inclined portion (132) of the contoured surface of the stream diverting element (130) is rotatably restrained to the flat portion (131) of the same contoured surface, whereby variations of the inclination of the water gate (110) and of the inclined portion (132) relative to the direction (F) of the water stream flowing in the water course (C) are allowed.

9. An apparatus (100) according to any one of claims 1 to 8, wherein the contoured surface of the stream diverting element (130) further comprises an additional inclined portion (133) oriented upwards in the vertical direction (V) and arranged upstream of the flat portion (131) relative to the longitudinal direction (L).

10. An apparatus (100) according to any one of claims 1 to 9, further comprising a control system configured to automatically drive the moving means.

## Patentansprüche

1. Eine hydraulische Vorrichtung (100), umfassend:
- wenigstens ein Wasserschütz (110), das zum Abfangen eines von einem Wasserlauf (C) gespeisten Wasserstroms konfiguriert ist zur Einstellung von dessen Durchflussrate,
- einen Rahmen (120), der für die Installation an den Ufern des Wasserlaufs (C) mittels einer metallischen Struktur (G1) der Vorrichtung (100) konfiguriert ist,
- ein erstes Bewegungsantriebsmittel, das zwischen dem besagten Rahmen (120) und dem Wasserschütz (110) befestigt ist, um eine Bewegung des letzteren in einer überwiegend vertikalen Richtung (V) der Vorrichtung (100) zu erlauben,
- wenigstens ein den Strom ableitendes Element (130), welches an dem Rahmen (120) befestigt ist und in Bezug auf die vertikale Richtung (V) unterhalb des Wasserschütz (110) angeordnet ist, und welches Strom ableitende Element (130) sich in einer Längsrichtung (L) der Vorrichtung (100) erstreckt und mit einer geschwungenen Oberfläche versehen ist, die aufeinander folgend einen flachen Bereich (131) umfasst sowie einen geneigten Bereich (132), der im Verhältnis zu der vertikalen Richtung (V) nach aufwärts gerichtet ist,
- ein zweites Bewegungsantriebsmittel, das in der metallischen Struktur (G1) befestigt und an dem Rahmen (120) angeschlossen ist, um eine Verschiebung des letzteren und des den Strom ableitenden Elements (130) in der vertikalen Richtung (V) zu erlauben,
- wenigstens ein Wasserrad (150), welches in der Längsrichtung (L) stromabwärts des den Strom ableitenden Elements (130) angeordnet ist.

2. Eine Vorrichtung (100) nach Anspruch 1, wobei das Wasserrad (150) an dem selben Rahmen (120) befestigt ist, an welchem das Wasserschütz (110) und das den Strom ableitende Element (130) festgelegt sind.

3. Eine Vorrichtung (100) nach Anspruch 1, ferner umfassend einen zusätzlichen Rahmen (160), welcher unabhängig von dem Rahmen (120) ist, an dem das Wasserschütz (110) und das den Strom ableitende Element (130) festgelegt sind, wobei der besagte, zusätzliche Rahmen (160) geeignet ist, das Wasserrad (150) zu stützen, und derart konfiguriert ist, dass er an den Ufern des besagten Wasserlaufs (C) mittels der zusätzlichen, metallischen Struktur (G2) der Vorrichtung (100) festlegbar ist, und wobei die Vorrichtung (100) ferner ein drittes Bewegungsantriebsmittel (170) umfasst, das in der besagten, zusätzlichen, metallischen Struktur (G2) befestigt und an dem zusätzlichen Rahmen (160) angeschlossen ist, der das Wasserrad (150) stützt, um eine Verschiebung des Wasserrades (150) in der vertikalen Richtung (V) zu erlauben.

4. Eine Vorrichtung (100) nach Anspruch 1, wobei das Wasserrad (150) an einem Rahmen gelagert ist, der solchermaßen konfiguriert ist, dass er an den Ufern des Wasserlaufs (C) mittels einer metallischen Tragstruktur installierbar ist, wobei der besagte Rahmen relativ zu der besagten metallischen Tragstruktur festgelegt ist.

5. Eine Vorrichtung (100) nach einem der Ansprüche 1 bis 4, wobei sich das den Strom ableitende Element (130) und das Wasserrad (150) auch in einer quer verlaufenden Richtung (T) erstrecken, rechtwinklig zu der vertikalen Richtung (V) und zu der Längsrichtung (L), wobei die in Querrichtung gemessene Größe des den Strom ableitenden Elements (130) und des Wasserrades (150) substantiell mit der in Querrichtung gemessenen Größe des Wasserschütz (110) korrespondiert.

6. Eine Vorrichtung (100) nach einem der Ansprüche 1 bis 5, wobei das Wasserrad nahe dem geneigten Bereich (132) der geschwungenen Oberfläche des den Strom ableitenden Elements (130) angeordnet ist.

7. Eine Vorrichtung (100) nach einem der Ansprüche 1 bis 6, wobei ein freies Ende des Wasserschütz (110) dem flachen Bereich (131) der geschwungenen Oberfläche des den Strom ableitenden Elements (130) zugewandt ist.

8. Eine Vorrichtung (100) nach einem der Ansprüche 1 bis 7, wobei das Wasserschütz (110) drehbar an dem Rahmen (120) festgelegt ist, und wobei der geneigte Bereich (132) der geschwungenen Oberfläche des den Strom ableitenden Elements (130) drehbar an dem flachen Bereich (131) der selben geschwungenen Oberfläche gehalten ist, wobei Variationen der Neigung des Wasserschütz (110) und des geneigten Bereichs (132) im Verhältnis zu der Richtung (F) des in dem Wasserlauf (C) fließenden Wasserstroms zugelassen sind.

9. Eine Vorrichtung (100) nach einem der Ansprüche 1 bis 8, wobei die geschwungene Oberfläche des den Strom ableitenden Elements (130) ferner einen zusätzlichen, geneigten Bereich (133) aufweist, der in der vertikalen Richtung (V) aufwärts gerichtet ist und im Verhältnis zu der Längsrichtung (L) stromaufwärts des flachen Bereichs (131) angeordnet ist.

10. Eine Vorrichtung (100) nach einem der Ansprüche 1 bis 9, ferner umfassend ein Steuersystem, welches derart konfiguriert ist, um die Bewegungsantriebsmittel automatisch zu betreiben.

## Revendications

1. Appareil hydraulique (100), comprenant :
- au moins une vanne-porte (110) configurée pour intercepter un courant d'eau fourni par un cours d'eau (C) afin d'ajuster son débit,
- un châssis (120) configuré pour être monté sur les berges dudit cours d'eau (C) au moyen d'une structure métallique (G1) de l'appareil (100),
- des premiers moyens mobiles montés entre ledit châssis (120) et ladite vanne-porte (110) de façon à permettre le mouvement de cette dernière suivant une direction (V) de l'appareil (100) qui est, de manière prédominante, verticale,
- au moins un élément de déviation de courant (130) fixé au châssis (120) et agencé au-dessous de la vanne-porte (110) par rapport à ladite direction verticale (V), ledit élément de déviation de courant (130) s'étirant suivant une direction longitudinale (L) de l'appareil (100), perpendiculaire à la direction verticale (V), et étant équipé d'une surface profilée comprenant de manière successive une partie plate (131) et une partie inclinée (132) orientée vers le haut par rapport à la direction verticale (V),
- des deuxièmes moyens mobiles (140) montés dans la structure métallique (G1) et reliés au châssis (120) de façon à permettre le déplacement de ce dernier et de l'élément de déviation de courant (130) suivant la direction verticale (V),
- au moins une turbine hydraulique (150) agencée en aval de l'élément de déviation de courant (130) suivant la direction longitudinale (L).

2. Appareil (100) selon la revendication 1, dans lequel la turbine hydraulique (150) est montée sur le même châssis (120) auquel sont retenus la vanne-porte (110) et l'élément de déviation de courant (130).

3. Appareil (100) selon la revendication 1, comprenant en outre un châssis supplémentaire (160) indépendant du châssis (120) sur lequel sont retenus la vanne-porte (110) et l'élément de déviation de courant (130), ledit châssis supplémentaire (160) étant adapté pour soutenir la turbine hydraulique (150) et configuré pour être monté sur les berges dudit cours d'eau (C) au moyen d'une structure métallique supplémentaire (G2) de l'appareil (100), et dans lequel l'appareil (100) comprend en outre des troisièmes moyens mobiles (170) montés dans ladite structure métallique supplémentaire (G2) et reliés au châssis supplémentaire (160) soutenant la turbine hydraulique (150) de façon à permettre le déplacement de la turbine hydraulique (150) suivant la direction verticale (V).

4. Appareil (100) selon la revendication 1, dans lequel la turbine hydraulique (150) est montée sur un châssis configuré pour être monté sur les berges dudit cours d'eau (C) au moyen d'une structure de support métallique, ledit châssis étant fixe par rapport à ladite structure de support métallique.

5. Appareil (100) selon l'une quelconque des revendications 1 à 4, dans lequel l'élément de déviation de courant (130) et la turbine hydraulique (150) s'étirent également suivant une direction transversale (T), perpendiculaire aux directions verticale (V) et longitudinale (L), la dimension transversale de l'élément de déviation de courant (130) et de la turbine hydraulique (150) correspondant essentiellement à la dimension transversale de la vanne-porte (110).

6. Appareil (100) selon l'une quelconque des revendications 1 à 5, dans lequel la turbine hydraulique (150) est agencée à proximité de la partie inclinée (132) de la surface profilée de l'élément de déviation de courant (130).

7. Appareil (100) selon l'une quelconque des revendications 1 à 6, dans lequel une extrémité libre de la vanne-porte (110) est en regard de la partie plate (131) de la surface profilée de l'élément de déviation de courant (130).

8. Appareil (100) selon l'une quelconque des revendications 1 à 7, dans lequel la vanne-porte (110) est retenue de manière rotative au châssis (120) et dans lequel la partie inclinée (132) de la surface profilée de l'élément de déviation de courant (130) est retenue de manière rotative à la partie plate (131) de la même surface profilée, moyennant quoi des variations de l'inclinaison de la vanne-porte (110) et de la partie inclinée (132) par rapport à la direction (F) du courant d'eau s'écoulant dans le cours d'eau (C) sont autorisées.

9. Appareil (100) selon l'une quelconque des revendications 1 à 8, dans lequel la surface profilée de l'élément de déviation de courant (130) comprend en outre une partie inclinée supplémentaire (133) orientée vers le haut suivant la direction verticale (V) et agencée en amont de la partie plate (131) par rapport à la direction longitudinale (L).

10. Appareil (100) selon l'une quelconque des revendications 1 à 9, comprenant en outre un système de commande configuré pour entraîner automatiquement les moyens mobiles.
